# EUROPÄISCHE PATENTSCHRIFT

(11) **EP 1 956 344 B1**
(45) Veröffentlichungstag und Bekanntmachung des Hinweises auf die Patenterteilung: **22.11.2017**
(21) Anmeldenummer: 07123225.0
(22) Anmeldetag: 14.12.2007
(51) Int. Cl.: B60G 17/0185, G01B 21/16, G01D 3/08, G01D 5/244, B60G 17/019

(54) **Verfahren zur Überprüfung der Kopplung zweier zueinander beweglicher Bezugspunkte**
Method for checking the coupling of two reference points which can be moved towards each other
Procédé de surveillance du couplage de deux points de référence se déplaçant l'un vers l'autre

(30) Priorität: 09.02.2007 DE 102007006552
(43) Veröffentlichungstag der Anmeldung: 13.08.2008
(73) Patentinhaber: Continental Teves AG & Co. OHG, 60488 Frankfurt (DE)
(72) Erfinder: Matthies, Thomas, 30823, Garbsen (DE)

(56) Entgegenhaltungen:
- DE-C1- 19 928 865
- US-A- 4 741 206
- US-A- 5 267 466

## Beschreibung

Die Erfindung betrifft ein Verfahren zur Überprüfung der Kopplung zweier zueinander beweglicher Bezugspunkte, insbesondere zur Überprüfung der mechanischen Kopplung zwischen einem ersten Bezugspunkt am Fahrzeugaufbau eines Kraftfahrzeuges und einem zweiten Bezugspunkt am Fahrwerk, wobei der Abstand der Bezugspunkte untereinander zwischen einer unteren und einer oberen Abstandsgrenze mittels eines Sensors gemessen wird, dessen Messbereich in mehrere aufeinander folgende und größengleiche Mess-Teilbereiche unterteilt ist, von denen jeder Teilbereich den gleichen Signalverlauf erzeugt.

Viele Kraftfahrzeuge verfügen heute bereits über ein Niveauregelsystem mit Luftfedern, mit dessen Hilfe das Niveau des Fahrzeugaufbaus gegenüber einem festen Bezugspunkt einstellbar ist, d.h. in aller Regel gegenüber der als "fest" angenommenen Achse der Räder bzw. einem als fest angenommenen Radmittelpunkt. Dabei werden natürlich bei schneller Fahrt und aufgrund von Straßenunebenheiten entstehenden Bewegungen des Radmittelpunktes durch eine entsprechende Regelung ausgeblendet bzw. gemittelt. Derartige Niveauregelsysteme weisen insbesondere den Vorteil auf, dass die Höhe des Fahrzeugaufbaus gegenüber einem festen Bezugspunkt unabhängig vom Beladungszustand des Kraftfahrzeuges genau eingestellt werden kann. Darüber hinaus ist es möglich, durch Beschicken der Luftfedern mit Druckluft den Fahrzeugaufbau anzuheben, beispielsweise um dem Kraftfahrzeug auf unebener Fahrstrecke eine größere Bodenfreiheit zu verleihen. Ferner kann der Fahrzeugaufbau des Kraftfahrzeuges durch Ablassen von Luft aus den Luftfedern abgesenkt werden, beispielsweise um ein Beladen des Kraftfahrzeuges zu erleichtern. Der Fahrzeugaufbau ist also zwischen einer Maximalhöhe, in der der Fahrzeugaufbau den größten Abstand zu einem festen Bezugspunkt einnimmt, und einer Minimalhöhe, in der der Fahrzeugaufbau den geringsten Abstand zu einem festen Bezugspunkt einnimmt, bewegbar.

Zur Regelung der Höhe des Fahrzeugaufbaus gegenüber einem solchen festen Bezugspunkt benötigt die Niveauregelanlage Niveausensoren, landläufig auch Höhensensoren genannt, mit deren Hilfe die Höhe des Fahrzeugaufbaus gegenüber dem festen Bezugspunkt bestimmbar ist. Als Höhensensoren werden üblicherweise an sich bekannte Drehwinkelsensoren verwendet, deren Drehwinkelbereich in mehrere aufeinander folgende Drehwinkelintervalle unterteilt ist, deren Messbereich also in mehrere aufeinander folgende und größengleiche Mess-Teilbereiche unterteilt ist. Dabei erzeugt jeder Teilbereich den gleichen Signalverlauf, so dass also jedem Drehwinkelintervall das gleiche Signalintervall zugeordnet ist.

Jeder Drehwinkelsensor wird derartig in das Kraftfahrzeug eingebaut, dass alle möglichen Höhen des Fahrzeugaufbaus gegenüber dem festen Bezugspunkt den Drehwinkeln im Wesentlichen eines Drehwinkelintervalls zugeordnet sind und sich der Drehwinkelsensor ausschließlich zwischen einem unteren und oberen Grenzwert des Drehwinkels bewegt.

Üblicherweise sind solche Sensoren an einem mit dem Rad verbundenen Fahrwerksteil befestigt und weisen einen aus ihrem Gehäuse nach außen geführten Drehhebel auf, der wiederum mit Hilfe eines Mehrgelenk- / Mehrhebelgetriebes, also etwa mit einer Koppelstange mit der Karosserie verbunden ist. So werden die Relativbewegungen zwischen dem Rad als "festem" Bezugspunkt und der Karosserie als Drehbewegungen auf den Sensor übertragen. Das von dem Drehwinkelsensor angezeigte Signal bewegt sich dann zwischen einem unteren und einem oberen Grenzsignal eines Kennfeldes bzw. Teil-Messbereiches. Bei entsprechender Programmierung der Fahrzeug-Steuereinheit ist es daher hinreichend sich einfach und genau möglich, aus dem Signal, das ein Drehwinkelsensor anzeigt, eindeutig auf die Höhe des Fahrzeugaufbaus gegenüber einem "festen" Bezugspunkt zu schließen.

Es kann jedoch bei Zusammentreffen ungünstiger Belastungszustände dazu kommen, dass die Kopplung zwischen Bezugspunkt und Karosserie abreist oder auch dass der Sensor "überschnappt", d.h. den einen bisherigen Messbereich verlässt und in den benachbarten Teilbereich wechselt. Ein solches "Überschnappen" kann durch geeignete Regelungen relativ leicht ausgefiltert werden und schränkt dann die Funktionstüchtigkeit der Niveauregelung nicht weiter ein. Bei einem Defekt der Koppelstange, etwa einem Abriss der Koppelstange beim harten Off-Road Einsatz, ist die Erkennung jedoch überaus wichtig für das Einleiten von Warnstrategien oder das Umschalten bzw. Not-Ausschalten der Steuerung für die Niveauregulierung, da eine Zuordnung des vom Sensor angezeigten Signals zu einer Fahrzeughöhe dann nicht mehr möglich ist.

Die DE 199 28 865 C1 offenbart ein Verfahren zur Bestimmung des Abstandes zweier zwischen einer unteren und einer oberen Abstandsgrenze zueinander beweglicher Bezugspunkt mittels eines Sensors, dessen Messbereich in mehrere aufeinander folgende Messwertintervalle unterteilt ist. Auch hier ist jedem Messwertintervall das gleiche Signalintervall zugeordnet. Bei diesem Verfahren wird durch eine Kalibrierung des Sensors und durch die Bestimmung eines so genannten "Offsets" zwischen einer definierten Position des Sensors zu den beiden Bezugspunkten und seiner tatsächlichen IstPosition der Abstand der beiden Bezugspunkte auch bei ungenau eingebautem Sensor ermittelt und der Einbaufehler kompensiert. Ein Abriss der Kopplung kann jedoch hier nicht eindeutig festgestellt werden.

In der US 5,267,466 ist ein Verfahren beschrieben zur Bestimmung des Abstandes zweier zwischen einer unteren und einer oberen Abstandsgrenze zueinander beweglichen Bezugspunkte, insbesondere zur Bestimmung des Abstandes eines Fahrzeugaufbaus gegenüber einem festen Bezugspunkt, mittels eines Sensors, wobei der Sensor in einer definierten Position zu den beiden Bezugspunkten derart positioniert ist, dass alle möglichen Abstände der Bezugspunkte den Messwerten seines Messintervalls zugeordnet sind und aus dem vom Sensor angezeigten Signal eindeutig auf den Abstand der Bezugspunkte geschlossen werden kann, wobei ferner Schritte zur Kalibrierung des Sensors vorgesehen sind, bei denen aus der Differenz aus einem ersten Signal und dem von dem Sensor angezeigten Signal ein Offset bestimmt wird, wobei schließlich zur Bestimmung des Abstands der beiden zueinander bewegliche Bezugspunkte zu dem von dem Sensor angezeigten Signal der Offset addiert wird. Auch hier kann ein Abriss der Kopplung nicht genau genug von anderen Fehlern unterschieden werden.

Für die Erfindung bestand also die Aufgabe, ein Verfahren vorzuschlagen, mit dessen Hilfe eine sichere Überprüfung der Kopplung, insbesondere der mechanischen Kopplung zwischen zwei zueinander beweglichen Bezugspunkten durchgeführt und bei fehlender Kopplung ein Warnsignal ausgegeben werden kann.

Gelöst wird diese Aufgabe durch die Merkmale der Hauptansprüche.

Weitere vorteilhafte Ausbildungen sind in den Unteransprüchen offenbart.

Dabei ist das erste erfindungsgemäße Verfahren so ausgebildet, dass
a) das Signal des Sensors einem ersten Vergleicher (Komparator) zugeführt wird, der das Signal mit einem oberen Signal-Schwellwert eines Mess-Teilbereiches vergleicht und bei Überschreiten des Signal-Schwellwertes ein erstes und dem Zustand "Überschreiten des oberen Signal-Schwellwertes" zugeordnetes binäres Ausgangssignal ausgibt,
b) das Signal des Sensors einem zweiten Vergleicher (Komparator) zugeführt wird, der das Signal mit einem unteren Signal-Schwellwert eines Mess-Teilbereiches vergleicht und bei Unterschreiten des Signal-Schwellwertes ein zweites und dem Zustand "Unterschreiten des unteren Signal-Schwellwertes" zugeordnetes binäres Ausgangssignal ausgibt,
c) das erste Ausgangssignal des ersten Vergleichers sowohl einem ersten Speicher als auch einem Inverter zugeführt wird, der das erste Ausgangssignal in seinen inversen Wert umformt und als invertiertes erstes Ausgangssignal ausgibt,
d) das zweite Ausgangssignal des zweiten Vergleichers sowohl einem zweiten Speicher als auch einem Inverter zugeführt wird, der das zweite Ausgangssignal in seinen inversen Wert umformt und als invertiertes zweites Ausgangssignal ausgibt,
e) das invertierte erste Ausgangssignal und das invertierte zweites Ausgangssignal einem ersten UND-Gatter zugeführt werden, welches bei Vorliegen beider invertierter Ausgangssignale ein drittes binäres Ausgangssignal ausgibt, welches sowohl dem ersten als auch dem zweiten Speicher als Rückstellungssignal, also ein "Reset" zugeführt wird,
f) der erste Speicher bei Anliegen des ersten Ausgangssignals ein viertes binäres und dem Zustand "Überschreiten des oberen Signal-Schwellwert" zugeordnetes Ausgangssignal an ein zweites UND-Gatter ausgibt und bei Anliegen des dritten Ausgangssignals rückgestellt wird,
g) der zweite Speicher bei Anliegen nur des zweiten Ausgangssignals ein fünftes binäres und dem Zustand "Unterschreiten des unteren Signal-Schwellwert" zugeordnetes Ausgangssignal an ein zweites UND-Gatter ausgibt und bei Anliegen des dritten Ausgangssignals rückgestellt wird, wobei
h) das zweite UND-Gatter bei Anliegen des vierten und fünften Ausgangssignals am Ausgang des zweiten UND-Gatters ein sechstes binäres Ausgangssignal ausgibt, welches als Kennzeichnung für eine nicht vorhandene Kopplung einer Fahrzeugsteuerung zur Verfügung gestellt wird.

Da beim Fehlen einer Kopplung, d.h. bei einem Defekt oder Abriss der Koppelstange oder des Sensors die gesamte Messeinrichtung oder auch nur die Koppelstange durch die Schwerkraft in einer Tiefstlage auspendelt und dabei den Übergang zwischen mindestens zwei Mess-Teilbereichen überstreicht, wird mit einer solchen Verfahrensweise ein Defekt sicher erkannt. Beim Überstreichen / Überpendeln des Übergangs zwischen mindestens zwei Mess-Teilbereichen, wird nämlich das Signal des Sensors innerhalb zweier aufeinander folgenden Auswertungen einmal oberhalb der oberen Schwelle und einmal unterhalb der unteren Schwelle liegen oder umgekehrt. Ist dies der Fall, wird auf ein Fehlen einer Kopplung erkannt, d.h. auf einen Defekt oder Abriss der Koppelstange.

Als "binäres Ausgangssignal" wird hierbei ein Signal verstanden, das zwei definierte Zustände annehmen kann, also 0 oder 1 oder jede andere binäre Form, wie etwa "Strom" oder "Nicht-Strom", "Licht" oder "Nicht-Licht" etc. Im Sinne der Erfindung kennzeichnet ein binäres Ausgangssignal dann einen Zustand wie beschrieben, also ein Überschreiten oder Nicht-Überschreiten bzw. ein Unterschreiten oder Nicht-Unterschreiten einer Schwelle. Wäre der Zustand "Überschreiten" mit dem Signal "1" bezeichnet, so würde der dazu komplementäre Zustand "Nicht-Überschreiten" durch den Vergleicher in ein "0"-Signal umgewandelt.

Oft ist es vorteilhaft, ein binäres Signal zu einem bestimmten Zeitpunkt zu erfassen. In diesem Zusammenhang spricht man von einer Abtastung des Signals. Der Abtastzeitpunkt wird oft über einen Takt, welcher dem entsprechenden Baustein (hier dem Speicherbaustein) neben dem binären Signal zugeführt wird, bestimmt. Erfolgen mehrere Abtastungen in Folge, spricht man auch von Mehrfachabtastungen. Ein entsprechender Baustein (Kombination von Speicher und Zähler bzw. mit einem getakteten Zähler versehener Speicher) kann die Anzahl der Abtastungen erfassen und speichern. Bei Erreichen einer Anzahl von Abtastungen wird ein binäres Ausgangssignal für den Zustand "Anzahl von Abtastungen erreicht" ausgegeben.

Das zweite erfindungsgemäße Verfahren besteht darin, dass
a) das Signal des Sensors einem ersten Vergleicher zugeführt wird, der das Signal mit einem oberen Signal-Schwellwert eines Mess-Teilbereiches vergleicht und bei Überschreiten des Signal-Schwellwertes ein erstes und dem Zustand "Überschreiten des oberen Signal-Schwellwertes" zugeordnetes binäres Ausgangssignal ausgibt,
b) das Signal des Sensors einem zweiten Vergleicher zugeführt wird, der das Signal mit einem unteren Signal-Schwellwert eines Mess-Teilbereiches vergleicht und bei Unterschreiten des Signal-Schwellwertes ein zweites und dem Zustand "Unterschreiten des unteren Signal-Schwellwertes" zugeordnetes binäres Ausgangssignal ausgibt,
c) das erste Ausgangssignal des ersten Vergleichers sowohl einem ersten mit einem getakteten Zähler versehenen Speicher als auch einem Inverter zugeführt wird, der das erste Ausgangssignal in seinen inversen Wert umformt und als invertiertes erstes Ausgangssignal ausgibt,
d) das zweite Ausgangssignal des zweiten Vergleichers sowohl einem zweiten mit einem getakteten Zähler versehenen Speicher als auch einem Inverter zugeführt wird, der das zweite Ausgangssignal in seinen inversen Wert umformt und als invertiertes zweites Ausgangssignal ausgibt,
e) das invertierte erste Ausgangssignal und das invertierte zweites Ausgangssignal einem ersten UND-Gatter zugeführt werden, welches bei Vorliegen beider invertierter Ausgangssignale ein drittes binäres Ausgangssignal ausgibt, welches sowohl dem ersten als auch dem zweiten Speicher als Rückstellungssignal (Reset) zugeführt wird,
f) der erste Speicher bei mehrfacher Abtastung eines ersten anliegenden Ausgangssignals ein viertes binäres und dem Zustand "mehrfaches Erkennen eines Überschreiten des oberen Signal-Schwellwert" zugeordnetes Ausgangssignal zunächst einem dritten Komparator (24) und nur dann an ein zweites UND-Gatter ausgibt, wenn im dritten Komparator eine anhand einer Schwelle überprüfte Anzahl von Abtastungen eines Signals überschritten wird, wobei der erste Speicher und bei Anliegen des dritten Ausgangssignals rückgestellt wird,
g) der zweite Speicher bei mehrfacher Abtastung eines zweiten anliegenden Ausgangssignals ein fünftes binäres und dem Zustand "mehrfaches Erkennen eines Unterschreiten des unteren Signal-Schwellwert" zugeordnetes Ausgangssignal zunächst einem vierten Komparator und nur dann an ein zweites UND-Gatter ausgibt, wenn im vierten Komparator eine anhand einer Schwelle überprüfte Anzahl von Signalen überschritten wird, wobei der zweite Speicher bei Anliegen des dritten Ausgangssignals rückgestellt wird,
h) das zweite UND-Gatter bei Anliegen des vierten und fünften Ausgangssignals am Ausgang des zweiten UND-Gatters ein sechstes binäres Ausgangssignal ausgibt, welches als Kennzeichnung für eine nicht vorhandene Kopplung einer Fahrzeugsteuerung zur Verfügung gestellt wird.

Damit lassen sich z.B. durch Störsignale oder EMI-Einflüsse d.h. durch elektromagnetische Impulse entstehende Störungen eliminieren, die die Steuerung, die Signalausgabe, oder den Ablauf des prüfenden Verfahrens beeinflussen könnten. Die Taktung erfolgt dabei z.B. so, dass beim Überstreichen / Überpendeln des Übergangs zwischen mindestens zwei Mess-Teilbereichen erst nach drei bis vier erfolgreichen Abtastungen pro Mess-Teilbereich des Signals auf einen Defekt in der Kopplung erkannt wird.

Eine vorteilhafte Weiterbildung der Schaltung mit den getakteten Zählern / Speichern besteht darin, dass der obere Signal-Schwellwert bei 70 % der Gesamtsignalstärke und der untere Signal-Schwellwert bei 30 % der Gesamtsignalstärke liegen. Damit sind die Schwellen so ausgelegt, dass auch bei "schnellen" Drehbewegungen des Winkelsensorarmes sogar ein elektrischer Überschnapper, wie eingangs beschrieben, erkannt wird und dass es im Normalbetrieb nicht zu fehlerhaften Erkennungen kommt. So wird dadurch gewährleistet, dass beispielsweise beim Test auf einer Schlechtwegestrecke das Höhensignal nicht von einer Schwellenüberschreitung durch den gesamten regelrechten Mess-Teilbereich zur anderen Schwellenüberschreitung springt, ohne denselben Mess-Teilbereich zu verlassen, d.h. im Fachjargon ausgedrückt, nicht von einem zum anderen "Plateau" springt.

Bei erkanntem Koppelstangenabriss wird ein Fehler (height sensor out of range) in die Steuerung eingelesen / eingetragen, welcher zu einer Aktivierung der Warnlampe und eine Regelung lediglich mit Hilfe der/des dann noch verbleibenden Sensors/en führt.

Eine weitere vorteilhafte Weiterbildung besteht darin, dass der Sensor in einer definierten Position zu den beiden Bezugspunkten derart positioniert ist, dass bei vorhandener Kopplung alle möglichen Abstände der Bezugspunkte den Signalwerten eines Teilbereiches zugeordnet sind. Zusammen mit der Gestaltung der Schwellen bei 30 und 70 % des Teil-Messbereiches ergibt sich auch bei Schlechtwegstrecken eine sichere Unterscheidung in Normalbetrieb und Kopplungsdefekt.

Eine weitere vorteilhafte Weiterbildung besteht darin, dass der Sensor als Winkelsensor mit einem umlaufenden Messbereich ausgebildet und in drei gleiche Teilbereiche aufgeteilt ist, nämlich in drei Teilbereiche von jeweils 120° Drehwinkel. Diese Sensoren sind preiswert und einfach herzustellen und können mit Hilfe des erfindungsgemäßen Verfahrens besonders leicht auf eine Kopplungskontrolle angepasst werden.

Eine weitere vorteilhafte Weiterbildung besteht darin, dass der Sensor ein pulsweitenmoduliertes Signal ausgibt, ein so genanntes PWM-Signal, da ein derartiges Signal sehr störsicher (EMI) ist, sowie mit einem solchen Signal der Schwellenvergleich und die Verarbeitung in vielen Steuerungsbereichen deutlich vereinfacht wird.

Anhand eines Ausführungsbeispieles soll die Erfindung näher erläutert werden. Es zeigen
- Fig. 1: einen Drehwinkelsensor mit Koppelstange in prinzipieller Darstellung
- Fig. 2: eine Ausführung einer Schaltung zur Durchführung des Verfahrens
- Fig. 3: eine weitere Ausführung einer Schaltung zur Durchführung des Verfahrens mit getakteten Zählern.
- Fig. 4: einen typischen Kennlinienverlauf eines Drehwinkelsensors

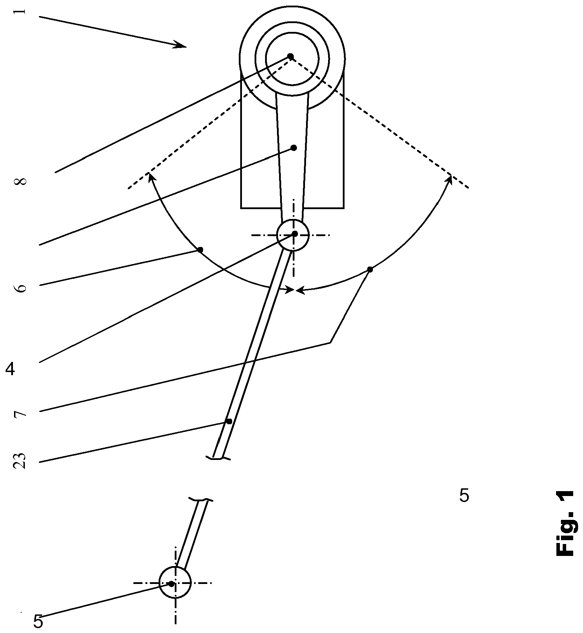

Die Fig. 1 zeigt die Anordnung eines Drehwinkelsensors 1 mit Koppelstange 2 in prinzipieller Darstellung. Der Drehwinkelsensor weist einen aus seinem Gehäuse geführten Drehhebel 3 auf, der mit der Koppelstange 2 an ihrem einen Ende 4 gelenkig verbunden ist. Der Drehwinkelsensor ist am hier nicht näher dargestellten Fahrwerk so befestigt, dass er mit dem Radkörper fest verbunden ist und sich mit letzterem bewegt. Das andere Ende 5 der Koppelstange ist an der hier ebenfalls nicht näher dargestellten Karosserie angelenkt. Der Drehhebel 3 des Drehwinkelsensors 1 überstreicht dabei im Normalbetrieb der Bewegung der Karosserie im Verhältnis zum Fahrwerk die Winkelbereiche 6 und 7, d. h. den Winkelbereich 7 beim Einfedern der Karosserie und den Winkelbereich 6 beim entsprechenden Ausfedern.

So werden die Relativbewegungen zwischen dem Drehpunkt 8 des Drehhebels im Drehwinkelsensor, d.h. zwischen dem Rad als "festem" Bezugspunkt und dem Anlenkpunkt 5 der Koppelstange, d.h. der Karosserie als Drehbewegungen auf den Sensor übertragen. Das von dem Drehwinkelsensor angezeigte Signal bewegt sich dann zwischen einem unteren und einem oberen Grenzsignal, hier 5 % und 95 % des aus den Winkelbereichen 6 und 7 bestehenden einen Teil-Messbereiches von insgesamt 120°.

Der Drehwinkelsensor 1 ist hier mit einem rundum laufenden Messbereich ausgebildet und in drei gleiche Teilbereiche von jeweils 120° Drehwinkel aufgeteilt. Genutzt wird im Normalbetrieb aber nur der hier dargstellte und aus den Winkelbereichen 6 und 7 bestehende Teil-Messbereich.

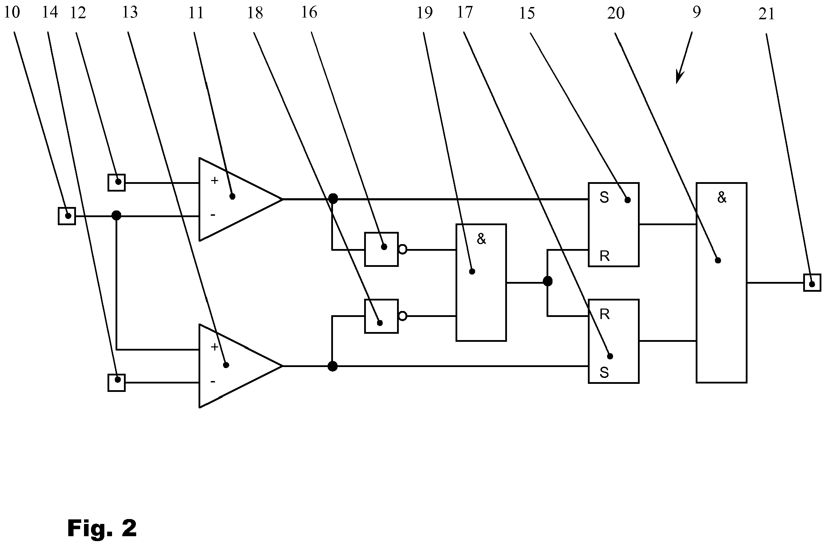

Fig. 2 zeigt eine Ausführung einer ersten Schaltung 9 zur Durchführung des Verfahrens zur Überprüfung der mechanischen Kopplung zwischen dem Drehpunkt 8 des Drehwinkelsensors und dem Anlenkpunkt 5 der Koppelstange an der Karosserie.

Das Signal 10 des Sensors 1 wird einem ersten Vergleicher/Komparator 11 zugeführt, der das Signal 10 mit einem oberen Signal-Schwellwert 12 eines Mess-Teilbereiches - hier 70 % eines PWM-Signales - vergleicht und bei Überschreiten des Signal-Schwellwertes ein erstes binäres Ausgangssignal ausgibt. Das Signal 10 des Sensors 1 wird gleichermaßen auch einem zweiten Vergleicher/Komparator 13 zugeführt, der das Signal mit einem unteren Signal-Schwellwert 14 eines Mess-Teilbereiches - hier 30 % eines PWM-Signales - vergleicht und bei Unterschreiten des Signal-Schwellwertes ein zweites binäres Ausgangssignal ausgibt.

Das erste binäre Ausgangssignal, also etwa der Wert 0 für den Zustand "Nicht-Überschreiten oder der Wert 1 für den Zustand "Überschreiten" des ersten Vergleichers wird sowohl einem ersten Speicher 15 zugeführt, als auch einem Inverter 16, der das erste Ausgangssignal in seinen invertierten Wert umformt, d.h. bei einem binären Ausgangssignal in Form von 0 oder 1 in den jeweils anderen komplementären Wert 1 oder 0. Der Inverter 16 gibt dann als Ausgangssignals das invertierte erste Ausgangssignal aus.

Das zweite Ausgangssignal des zweiten Vergleichers 13 wird ebenfalls sowohl einem zweiten Speicher 17 als auch einem Inverter 18 zugeführt, der, wie bereits oben anhand des Inverters 16 beschrieben, das zweite Ausgangssignal in seinen inversen Wert umformt und als inverses zweites Ausgangssignal ausgibt.

Das inverse erste Ausgangssignal und das inverse zweites Ausgangssignal werden einem ersten UND-Gatter 19 zugeführt, welches bei Vorliegen beider inverser Ausgangssignale ein drittes binäres Ausgangssignal ausgibt, welches sowohl dem ersten Speicher 15 als auch dem zweiten Speicher 17 als Rückstellungssignal, d.h. als so genanntes "Reset"-Signal zugeführt wird.

Der erste Speicher 15 gibt bei Anliegen nur des ersten Ausgangssignals ein viertes binäres Ausgangssignal an ein zweites UND-Gatter 20 aus, während er bei Anliegen des dritten Ausgangssignals kein Ausgangssignal bzw. ein 0-Signal an das zweite UND-Gatter 20 ausgibt.

Der zweite Speicher 17 gibt bei Anliegen nur des zweiten Ausgangssignals ein fünftes binäres Ausgangssignal an das zweite UND-Gatter 20 aus, während er bei Anliegen des dritten Ausgangssignals kein Ausgangssignal bzw. ein 0-Signal an das zweite UND-Gatter 20 ausgibt.

Das zweite UND-Gatter 20 gibt dann bei Anliegen des vierten und fünften Ausgangssignals am Ausgang des zweiten UND-Gatters ein sechstes binäres Ausgangssignal aus, nämlich eine 1 bei vorliegender Überschreitung der oberen und der unteren Schwelle - oder umgekehrt -und eine 0 bei nicht vorhandener nacheinander erfolgender Schwellenüberschreitung. Das Ausgangssignal 21 des zweiten UND-Gatters 20 wird zur Kennzeichnung für eine nicht vorhandene Kopplung einer Fahrzeugsteuerung zur Verfügung gestellt. Im Fall dass das Ausgangssignal 21 des zweiten UND-Gatters 20 eine 1 ist, wird der Koppelstangendefekt angenommen.

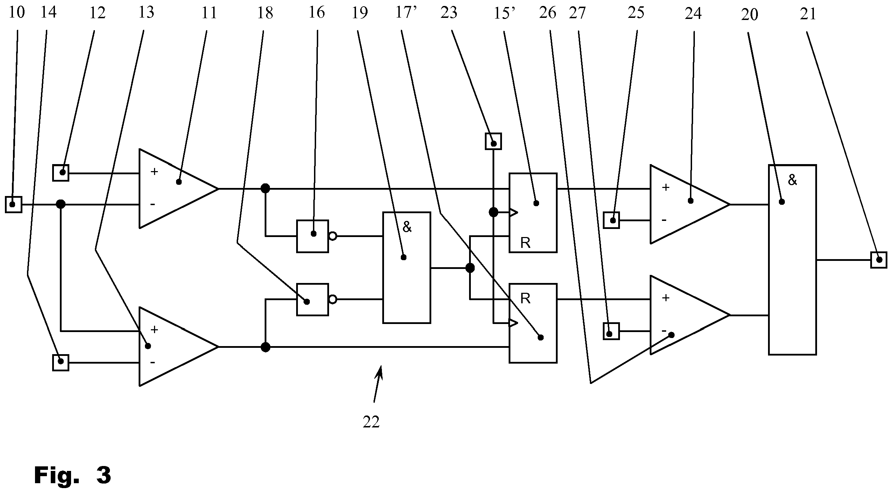

Fig. 3 zeigt eine weitere Schaltung 22 zur Durchführung des Verfahrens, die im Wesentlichen ebenso arbeitet wie die in der Fig. 2 gezeigte Schaltung 9. Jedoch sind bei dieser Ausführung - gemäß Schaltung 22 - die Speicher 15' und 17' mit einem getakteten Zähler 23 gekoppelt, so dass das vierte binäre Ausgangssignal als Mehrfachsignal zunächst einem dritten Komparator 24 und nur dann ein Ausgangssignal an das zweites UND-Gatter 20 weitergegeben wird, wenn im dritten Komparator 24 eine anhand einer Schwelle 25 überprüfte Anzahl von Signalabtastungen / Signalspeicherungen überschritten wird.

Ebenso wird das fünfte binäre Ausgangssignal als Mehrfachsignal zunächst einem vierten Komparator 26 und nur als Ausgangssignal dann an das zweites UND-Gatter 20 weitergegeben, wenn im vierten Komparator 26 eine anhand einer Schwelle 27 überprüfte Anzahl von Signalabtastungen / Signalspeicherungen überschritten wird.

Hier liegen die Schwellen 25 und 27 bei drei Signalabtastungen in Folge. Damit lassen sich auf einfache Weise Störsignale ausschalten bzw. digital filtern.

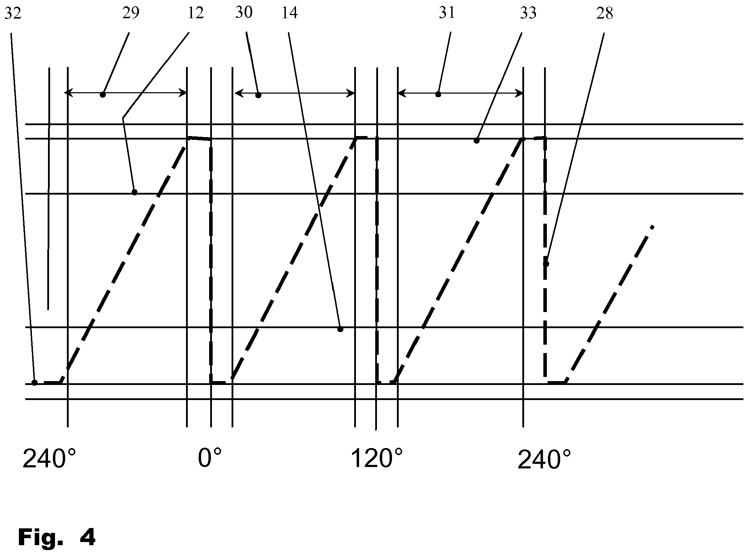

Fig. 4 zeigt einen typischen Kennlinienverlauf 28 eines Drehwinkelsensors 1, der mit einem rundum laufenden Messbereich ausgebildet und in drei gleiche Teilbereiche 29, 30 und 31 von jeweils 120° Drehwinkel aufgeteilt ist. Genutzt wird im Normalbetrieb aber nur der hier dargstellte und aus den Winkelbereichen 6 und 7 bestehende Teil-Messbereich 30. Das von dem Drehwinkelsensor angezeigte Signal bewegt sich dann im Teil-Messbereich 30 zwischen einem unteren Grenzsignal 32 und einem oberen Grenzsignal 33, hier 5 % und 95 % des gesamten "möglichen" Messsignals / PWM-Signals des aus den Winkelbereichen 6 und 7 bestehenden einen Teil-Messbereiches 30 von insgesamt 120°.

Der Signal-Schwellwert 12 des Mess-Teilbereiches 30, nach dessen Überschreitung der erste Komparator 11 ein erstes binäres Ausgangssignal ausgibt, liegt hier bei 70 % des Gesamtsignals /PWM-Signals. Der Signal-Schwellwert 14 des Mess-Teilbereiches 30, nach dessen Unterschreitung der zweite Komparator 13 ein zweites binäres Ausgangssignal ausgibt, liegt hier bei 30 % des Gesamtsignals.

### Bezugszeichenliste

### (Teil der Beschreibung)

- 1: Drehwinkelsensor
- 2: Koppelstange
- 3: Drehhebel
- 4: Fahrwerksseitiges Ende der Koppelstange
- 5: Karosserieseitiges Ende der Koppelstange
- 6: Winkelbereich
- 7: Winkelbereich
- 8: Drehpunkt des Drehhebels im Drehwinkelsensor
- 9: Schaltung
- 10: Signal des Drehwinkelsensors
- 11: Vergleicher / Komparator
- 12: Signal-Schwellwert
- 13: Vergleicher / Komparator
- 14: Signal-Schwellwert
- 15: Speicher
- 15': Speicher mit getaktetem Zähler
- 16: Inverter
- 17: Speicher
- 17': Speicher mit getaktetem Zähler
- 18: Inverter
- 19: UND-Gatter
- 20: UND-Gatter
- 21: Ausgangssignal
- 22: Schaltung
- 23: Getakteter Zähler
- 24: Vergleicher / Komparator
- 25: Schwellensignal für die Signal-Anzahl
- 26: Vergleicher / Komparator
- 27: Schwellensignal für die Signal-Anzahl
- 28: Kenlinienverlauf
- 29: Mess-Teilbereich
- 30: Mess-Teilbereich
- 31: Mess-Teilbereich
- 32: Unteres Grenzsignal
- 33: Oberes Grenzsignal

## Patentansprüche

1. Verfahren zur Überprüfung der Kopplung zweier zueinander beweglicher Bezugspunkte, insbesondere zur Überprüfung der mechanischen Kopplung zwischen einem ersten Bezugspunkt am Fahrzeugaufbau eines Kraftfahrzeuges und einem zweiten Bezugspunkt am Fahrwerk, wobei der Abstand der Bezugspunkte untereinander zwischen einer unteren und einer oberen Abstandsgrenze mittels eines Sensors gemessen wird, dessen Messbereich in mehrere aufeinander folgende und größengleiche Mess-Teilbereiche unterteilt ist, von denen jeder Teilbereich den gleichen Signalverlauf erzeugt, **dadurch gekennzeichnet, dass**
a) das Signal des Sensors einem ersten Vergleicher (11) zugeführt wird, der das Signal mit einem oberen Signal-Schwellwert eines Mess-Teilbereiches (30) vergleicht und bei Überschreiten des Signal-Schwellwertes ein erstes und dem Zustand "Überschreiten des oberen Signal-Schwellwertes" zugeordnetes binäres Ausgangssignal ausgibt,
b) das Signal des Sensors einem zweiten Vergleicher (13) zugeführt wird, der das Signal mit einem unteren Signal-Schwellwert eines Mess-Teilbereiches (30) vergleicht und bei Unterschreiten des Signal-Schwellwertes ein zweites und dem Zustand "Unterschreiten des unteren Signal-Schwellwertes" zugeordnetes binäres Ausgangssignal ausgibt,
c) das erste Ausgangssignal des ersten Vergleichers (11) sowohl einem ersten Speicher (15) als auch einem Inverter (16) zugeführt wird, der das erste Ausgangssignal in seinen inversen Wert umformt und als invertiertes erstes Ausgangssignal ausgibt,
d) das zweite Ausgangssignal des zweiten Vergleichers (13) sowohl einem zweiten Speicher (17) als auch einem Inverter (18) zugeführt wird, der das zweite Ausgangssignal in seinen inversen Wert umformt und als invertiertes zweites Ausgangssignal ausgibt,
e) das invertierte erste Ausgangssignal und das invertierte zweites Ausgangssignal einem ersten UND-Gatter (19) zugeführt werden, welches bei Vorliegen beider invertierter Ausgangssignale ein drittes binäres Ausgangssignal ausgibt, welches sowohl dem ersten als auch dem zweiten Speicher als Rückstellungssignal (Reset) zugeführt wird,
f) der erste Speicher (15) bei Anliegen des ersten Ausgangssignals ein viertes binäres und dem Zustand "Überschreiten des oberen Signal-Schwellwert" zugeordnetes Ausgangssignal an ein zweites UND-Gatter (20) ausgibt und bei Anliegen des dritten Ausgangssignals rückgestellt wird,
g) der zweite Speicher (17) bei Anliegen des zweiten Ausgangssignals ein fünftes binäres und dem Zustand "Unterschreiten des unteren Signal-Schwellwert" zugeordnetes Ausgangssignal an das zweite UND-Gatter (20) ausgibt und bei Anliegen des dritten Ausgangssignals rückgestellt wird, wobei
h) das zweite UND-Gatter (20) bei Anliegen des vierten und fünften Ausgangssignals am Ausgang des zweiten UND-Gatters ein sechstes binäres Ausgangssignal ausgibt, welches als Kennzeichnung für eine nicht vorhandene Kopplung einer Fahrzeugsteuerung zur Verfügung gestellt wird.

2. Verfahren zur Überprüfung der Kopplung zweier zueinander beweglicher Bezugspunkte, insbesondere zur Überprüfung der mechanischen Kopplung zwischen einem ersten Bezugspunkt am Fahrzeugaufbau eines Kraftfahrzeuges und einem zweiten Bezugspunkt am Fahrwerk, wobei der Abstand der Bezugspunkte untereinander zwischen einer unteren und einer oberen Abstandsgrenze mittels eines Sensors gemessen wird, dessen Messbereich in mehrere aufeinander folgende und größengleiche Mess-Teilbereiche unterteilt ist, von denen jeder Teilbereich den gleichen Signalverlauf erzeugt, **dadurch gekennzeichnet, dass**
a) das Signal des Sensors einem ersten Vergleicher (11) zugeführt wird, der das Signal mit einem oberen Signal-Schwellwert eines Mess-Teilbereiches (30) vergleicht und bei Überschreiten des Signal-Schwellwertes ein erstes und dem Zustand "Überschreiten des oberen Signal-Schwellwertes" zugeordnetes binäres Ausgangssignal ausgibt,
b) das Signal des Sensors einem zweiten Vergleicher (13) zugeführt wird, der das Signal mit einem unteren Signal-Schwellwert eines Mess-Teilbereiches (30) vergleicht und bei Unterschreiten des Signal-Schwellwertes ein zweites und dem Zustand "Unterschreiten des unteren Signal-Schwellwertes" zugeordnetes binäres Ausgangssignal ausgibt,
c) das erste Ausgangssignal des ersten Vergleichers (11) sowohl einem ersten mit einem getakteten Zähler versehenen Speicher (15') als auch einem Inverter (16) zugeführt wird, der das erste Ausgangssignal in seinen inversen Wert umformt und als invertiertes erstes Ausgangssignal ausgibt,
d) das zweite Ausgangssignal des zweiten Vergleichers (13) sowohl einem zweiten mit einem getakteten Zähler versehenen Speicher (17') als auch einem Inverter (18) zugeführt wird, der das zweite Ausgangssignal in seinen inversen Wert umformt und als invertiertes zweites Ausgangssignal ausgibt,
e) das invertierte erste Ausgangssignal und das invertierte zweites Ausgangssignal einem ersten UND-Gatter (19) zugeführt werden, welches bei Vorliegen beider invertierter Ausgangssignale ein drittes binäres Ausgangssignal ausgibt, welches sowohl dem ersten als auch dem zweiten Speicher als Rückstellungssignal (Reset) zugeführt wird,
f) der erste Speicher (15') bei mehrfacher Abtastung eines ersten anliegenden Ausgangssignals ein viertes binäres und dem Zustand "mehrfaches Erkennen eines Überschreiten des oberen Signal-Schwellwert" zugeordnetes Ausgangssignal zunächst einem dritten Komparator (24) und nur dann an ein zweites UND-Gatter (20) ausgibt, wenn im dritten Komparator eine anhand einer Schwelle überprüfte Anzahl von Abtastungen eines Signals überschritten wird, wobei der erste Speicher (15') und bei Anliegen des dritten Ausgangssignals rückgestellt wird,
g) der zweite Speicher (17') bei mehrfacher Abtastung eines zweiten anliegenden Ausgangssignals ein fünftes binäres und dem Zustand "mehrfaches Erkennen eines Unterschreiten des unteren Signal-Schwellwert" zugeordnetes Ausgangssignal zunächst einem vierten Komparator (26) und nur dann an ein zweites UND-Gatter (20)ausgibt, wenn im vierten Komparator eine anhand einer Schwelle überprüfte Anzahl von Signalen überschritten wird, wobei der zweite Speicher (17') bei Anliegen des dritten Ausgangssignals rückgestellt wird,
h) das zweite UND-Gatter (20) bei Anliegen des vierten und fünften Ausgangssignals am Ausgang des zweiten UND-Gatters ein sechstes binäres Ausgangssignal ausgibt, welches als Kennzeichnung für eine nicht vorhandene Kopplung einer Fahrzeugsteuerung zur Verfügung gestellt wird.

3. Verfahren nach Anspruch 2, **dadurch gekennzeichnet, dass** der obere Signal-Schwellwert bei 70 % der Gesamtsignalstärke und der untere Signal-Schwellwert bei 30 % der Gesamtsignalstärke liegen.

4. Verfahren nach Anspruch 1 bis 3, **dadurch gekennzeichnet, dass** der Sensor in einer definierten Position zu den beiden Bezugspunkten derart positioniert ist, dass bei vorhandener Kopplung alle möglichen Abstände der Bezugspunkte den Signalwerten eines Teilbereiches zugeordnet sind.

5. Verfahren nach Anspruch 1 bis 4, **dadurch gekennzeichnet, dass** der Sensor als Winkelsensor mit einem umlaufenden Messbereich ausgebildet und in drei gleiche Teilbereiche aufgeteilt ist.

6. Verfahren nach Anspruch 1 bis 5, **dadurch gekennzeichnet, dass** der Sensor ein pulsweitenmoduliertes Signal ausgibt.

## Claims

1. Method for checking the coupling of two reference points which are movable with respect to one another, in particular for checking the mechanical coupling between a first reference point on the vehicle body of a motor vehicle and a second reference point on the chassis, the distance between the reference points being measured between a lower and an upper distance limit by means of a sensor, the measurement range of which is subdivided into a plurality of successive measurement sub-ranges of the same size, each sub-range of which generates the same signal profile, **characterized in that**
a) the signal from the sensor is supplied to a first comparator (11) which compares the signal with an upper signal threshold value of a measurement sub-range (30) and outputs a first binary output signal assigned to the state "exceeding of the upper signal threshold value" if the signal threshold value is exceeded,
b) the signal from the sensor is supplied to a second comparator (13) which compares the signal with a lower signal threshold value of a measurement sub-range (30) and outputs a second binary output signal assigned to the state "undershooting of the lower signal threshold value" if the signal threshold value is undershot,
c) the first output signal from the first comparator (11) is supplied both to a first memory (15) and to an inverter (16) which converts the first output signal into its inverse value and outputs it as an inverted first output signal,
d) the second output signal from the second comparator (13) is supplied both to a second memory (17) and to an inverter (18) which converts the second output signal into its inverse value and outputs it as an inverted second output signal,
e) the inverted first output signal and the inverted second output signal are supplied to a first AND gate (19) which, if both inverted output signals are present, outputs a third binary output signal which is supplied both to the first and to the second memory as a reset signal (reset),
f) the first memory (15) outputs a fourth binary output signal assigned to the state "exceeding of the upper signal threshold value" to a second AND gate (20) if the first output signal is applied and is reset if the third output signal is applied,
g) the second memory (17) outputs a fifth binary output signal assigned to the state "undershooting of the lower signal threshold value" to the second AND gate (20) if the second output signal is applied and is reset if the third output signal is applied, wherein
h) the second AND gate (20) outputs a sixth binary output signal at the output of the second AND gate if the fourth and fifth output signals are applied, which sixth binary output signal is provided as an indication of non-existent coupling of a vehicle controller.

2. Method for checking the coupling of two reference points which are movable with respect to one another, in particular for checking the mechanical coupling between a first reference point on the vehicle body of a motor vehicle and a second reference point on the chassis, the distance between the reference points being measured between a lower and an upper distance limit by means of a sensor, the measurement range of which is subdivided into a plurality of successive measurement sub-ranges of the same size, each sub-range of which generates the same signal profile, **characterized in that**
a) the signal from the sensor is supplied to a first comparator (11) which compares the signal with an upper signal threshold value of a measurement sub-range (30) and outputs a first binary output signal assigned to the state "exceeding of the upper signal threshold value" if the signal threshold value is exceeded,
b) the signal from the sensor is supplied to a second comparator (13) which compares the signal with a lower signal threshold value of a measurement sub-range (30) and outputs a second binary output signal assigned to the state "undershooting of the lower signal threshold value" if the signal threshold value is undershot,
c) the first output signal from the first comparator (11) is supplied both to a first memory (15') provided with a clocked counter and to an inverter (16) which converts the first output signal into its inverse value and outputs it as an inverted first output signal,
d) the second output signal from the second comparator (13) is supplied both to a second memory (17') provided with a clocked counter and to an inverter (18) which converts the second output signal into its inverse value and outputs it as an inverted second output signal,
e) the inverted first output signal and the inverted second output signal are supplied to a first AND gate (19) which, if both inverted output signals are present, outputs a third binary output signal which is supplied both to the first and to the second memory as a reset signal (reset),
f) the first memory (15') first of all outputs a fourth binary output signal assigned to the state "repeated detection of exceeding of the upper signal threshold value" to a third comparator (24) if a first applied output signal is sampled repeatedly and only outputs it to a second AND gate (20) when a number of operations of sampling a signal, which is checked on the basis of a threshold, is exceeded in the third comparator, the first memory (15') being reset if the third output signal is applied,
g) the second memory (17') first of all outputs a fifth binary output signal assigned to the state "repeated detection of undershooting of the lower signal threshold value" to a fourth comparator (26) if a second applied output signal is sampled repeatedly and only outputs it to a second AND gate (20) if a number of signals, which is checked on the basis of a threshold, is exceeded in the fourth comparator, the second memory (17') being reset if the third output signal is applied,
h) the second AND gate (20) outputs a sixth binary output signal at the output of the second AND gate if the fourth and fifth output signals are applied, which sixth binary output signal is provided as an indication of non-existent coupling of a vehicle controller.

3. Method according to Claim 2, **characterized in that** the upper signal threshold value is 70% of the total signal strength and the lower signal threshold value is 30% of the total signal strength.

4. Method according to Claims 1 to 3, **characterized in that** the sensor is positioned at a defined position with respect to the two reference points in such a manner that all possible distances between the reference points are assigned to the signal values of a sub-range if coupling exists.

5. Method according to Claims 1 to 4, **characterized in that** the sensor is in the form of an angle sensor with a circumferential measurement range and is divided into three identical sub-ranges.

6. Method according to Claims 1 to 5, **characterized in that** the sensor outputs a pulse-width-modulated signal.

## Revendications

1. Procédé de vérification du couplage de deux points de référence mobiles l'un par rapport à l'autre, notamment pour vérifier le couplage mécanique entre un premier point de référence sur la structure de véhicule d'un véhicule automobile et un deuxième point de référence sur le train de roulement, dans lequel la distance des points de référence l'un par rapport à l'autre est mesurée entre des limites de distance inférieure et supérieure au moyen d'un capteur dont la plage de mesure est subdivisée en plusieurs plages de mesure partielles consécutives de tailles identiques, parmi lesquelles chaque plage partielle génère la même forme d'onde de signal, **caractérisé en ce que**
a) le signal du capteur est délivré à un premier comparateur (11) qui compare le signal à une valeur de seuil de signal supérieure d'une plage de mesure partielle (30) et délivre un premier signal de sortie binaire et associé à l'état de "dépassement de la valeur de seuil de signal supérieure" lors du dépassement de la valeur de seuil de signal,
b) le signal du capteur est délivré à un deuxième comparateur (13) qui compare le signal à une valeur de seuil de signal inférieure d'une plage de mesure partielle (30) et délivre un deuxième signal de sortie binaire et associé à l'état "abaissement en-dessous de la valeur de seuil de signal inférieure" lors d'un abaissement en-dessous de la valeur de seuil de signal,
c) le premier signal de sortie du premier comparateur (11) est délivré à la fois à une première mémoire (15) et à un onduleur (16) qui convertit le premier signal de sortie en sa valeur inverse et le délivre en tant que premier signal de sortie inversé,
d) le deuxième signal de sortie du deuxième comparateur (13) est délivré à la fois à une deuxième mémoire (17) et à un onduleur (18) qui convertit le deuxième signal de sortie en sa valeur inverse et le délivre en tant que deuxième signal de sortie inversé,
e) le premier signal de sortie inversé et le deuxième signal de sortie inversé sont délivrés à une première porte ET (19) qui délivre un troisième signal de sortie binaire qui est délivré à la fois aux première et deuxième mémoires en tant que signal de réinitialisation (Reset) lors de la présence des deux signaux de sortie inversés,
f) la première mémoire (15) délivre un quatrième signal de sortie binaire et associé à l'état "dépassement de la valeur de seuil de signal supérieure" à une deuxième porte ET (20) lors de l'application du premier signal de sortie et est réinitialisée lors de l'application du troisième signal de sortie,
g) la deuxième mémoire (17) délivre un cinquième signal de sortie binaire et associé à l'état "abaissement en-dessous de la valeur de seuil de signal inférieure" à la deuxième porte ET (20) lors de l'application du deuxième signal de sortie et est réinitialisée lors de l'application du troisième signal de sortie, dans lequel
h) la deuxième porte ET (20) délivre un sixième signal de sortie binaire qui est mis à disposition en tant que caractéristique de l'absence de couplage d'une unité de commande de véhicule lors de l'application des quatrième et cinquième signaux de sortie à la sortie de la deuxième porte ET.

2. Procédé de vérification du couplage de deux points de référence mobiles l'un par rapport à l'autre, notamment pour vérifier le couplage mécanique entre un premier point de référence sur la structure de véhicule d'un véhicule automobile et un deuxième point de référence sur le train de roulement, dans lequel la distance des points de référence l'un par rapport à l'autre est mesurée entre des limites de distance inférieure et supérieure au moyen d'un capteur dont la plage de mesure est subdivisée en plusieurs plages de mesure partielles consécutives et de tailles identiques, parmi lesquelles chaque plage partielle génère la même forme d'onde de signal, **caractérisé en ce que**
a) le signal du capteur est délivré à un premier comparateur (11) qui compare le signal à une valeur de seuil de signal supérieure d'une plage de mesure partielle (30) et délivre un premier signal de sortie binaire et associé à l'état "dépassement de la valeur de seuil de signal supérieure" lors du dépassement de la valeur de seuil de signal,
b) le signal du capteur est délivré à un deuxième comparateur (13) qui compare le signal à une valeur de seuil de signal inférieure d'une plage de mesure partielle (30) et délivre un deuxième signal de sortie binaire et associé à l'état "abaissement en-dessous de la valeur de seuil de signal inférieure" lors d'un abaissement en-dessous de la valeur de seuil de signal,
c) le premier signal de sortie du premier comparateur (11) est délivré à la fois à une première mémoire pourvue d'un compteur cadencé (15') et à un onduleur (16) qui convertit le premier signal de sortie en sa valeur inverse et le délivre en tant que premier signal de sortie inversé,
d) le deuxième signal de sortie du deuxième comparateur (13) est délivré à la fois à une deuxième mémoire pourvue d'un compteur cadencé (17') et à un onduleur (18) qui convertit le deuxième signal de sortie en sa valeur inverse et le délivre en tant que deuxième signal de sortie inversé,
e) le premier signal de sortie inversé et le deuxième signal de sortie inversé sont délivrés à une première porte ET (19) qui délivre un troisième signal de sortie binaire qui est délivré à la fois aux première et deuxième mémoires en tant que signal de réinitialisation (Reset) lors de la présence des deux signaux de sortie inversés,
f) la première mémoire (15') délivre en premier lieu un quatrième signal de sortie binaire et associé à l'état "détection multiple d'un dépassement de la valeur de seuil de signal supérieure" à un troisième comparateur (24) lors du balayage multiple d'un premier signal de sortie appliqué et ne le délivre à une deuxième porte ET (20) que lorsqu'un nombre de balayages d'un signal vérifié sur la base d'un seuil est dépassé dans le troisième comparateur, dans lequel la première mémoire (15') est réinitialisée lors de l'application du troisième signal de sortie,
g) la deuxième mémoire (17') délivre en premier lieu un cinquième signal de sortie binaire et associé à l'état "détection multiple d'un abaissement en-dessous de la valeur de seuil de signal inférieure" à un quatrième comparateur (26) lors du balayage multiple d'un deuxième signal de sortie appliqué et ne le délivre à une deuxième porte ET (20) que lorsqu'un nombre de signaux vérifié sur la base d'un seuil est dépassé dans le quatrième comparateur, dans lequel la deuxième mémoire (17') est réinitialisée lors de l'application du troisième signal de sortie,
h) la deuxième porte ET (20) délivre un sixième signal de sortie binaire qui est mis à disposition en tant que caractéristique de l'absence de couplage d'une unité de commande de véhicule lors de l'application des quatrième et cinquième signaux de sortie à la sortie de la deuxième porte ET.

3. Procédé selon la revendication 2, **caractérisé en ce que** la valeur de seuil supérieure se situe à 70 % de l'intensité totale du signal et **en ce que** la valeur de seuil de signal inférieure se situe à 30 % de l'intensité totale du signal.

4. Procédé selon les revendications 1 à 3, **caractérisé en ce que** le capteur est positionné à une position définie par rapport aux deux points de référence de manière à ce que, en présence d'un couplage, toutes les distances possibles des points de référence soient associées à des valeurs de signal d'une plage partielle.

5. Procédé selon les revendications 1 à 4, **caractérisé en ce que** le capteur est réalisé sous la forme d'un capteur d'angle ayant une plage de mesure circonférentielle et est subdivisé en trois plages partielles identiques.

6. Procédé selon les revendications 1 à 5, **caractérisé en ce que** le capteur délivre un signal modulé en largeur d'impulsion.
